# EUROPÄISCHE PATENTSCHRIFT

(11) **EP 0 834 483 B1**
(45) Veröffentlichungstag und Bekanntmachung des Hinweises auf die Patenterteilung: **09.01.2002**
(21) Anmeldenummer: 97116714.3
(22) Anmeldetag: 25.09.1997
(51) Int. Cl.: C03C 17/36

(54) **Wärmedämmendes Schichtsystem für transparente Substrate**
Thermally insulating coating system for transparent substrates
Revêtement multicouche thermiquement isolant pour un substrat transparent

(30) Priorität: 02.10.1996 DE 19640800
(43) Veröffentlichungstag der Anmeldung: 08.04.1998
(73) Patentinhaber: arcon Flachglas-Veredelungs GmbH & Co. Beschichtungstechnik KG, 91555 Feuchtwangen (DE)
(72) Erfinder: Schneider, Siegfried, 01445 Radebeul (DE); Hartung, Ullrich, Dr., 01129 Dresden (DE); Kirchhoff, Volker, 01324 Dresden (DE); Söder, Bernhard, Dr., 91639 Wolframs-Eschenbach (DE); Meier, Andreas, 72793 Pfullingen (DE)

(56) Entgegenhaltungen:
- EP-A- 0 035 906
- EP-A- 0 275 474
- EP-A- 0 304 234
- EP-A- 0 308 578
- GB-A- 2 186 001

## Beschreibung

Die Erfindung betrifft ein wärmedämmendes Schichtsystem für transparente Substrate, vorzugsweise Glas, welches eine hohe Transmission im sichtbaren und eine hohe Reflexion im infraroten Wellenlängenbereich, d. h. eine hohe Selektivität besitzt. Verglasungen mit derartigen Schichtsystemen haben die Eigenschaft, dass sie einen möglichst großen Teil der solaren Energieeinstrahlung in die damit verglasten Räume hindurchlassen und einen möglichst hohen Anteil der wesentlich niederenergetischen Raumtemperaturstrahlung reflektieren. Sie lassen nur den sichtbaren Anteil des Sonnenspektrums passieren und reflektieren fast vollständig alle Strahlung mit größerer Wellenlänge. Die einzelnen Schichten werden durch Vakuumbeschichtung, insbesondere Sputtern, aufgebracht.

Bekannt sind wärmedämmende Schichtsysteme mit der Schichtfolge Metalloxid 1 (Me1O) - Ag- Blocker - Metalloxid 2 (Me2O), wobei anstelle von Ag auch Au oder Cu verwendet wird. Die meist verwendeten Blockerschichten bestehen beispielsweise aus wenige nm dicken Metallschichten, wie Al, CrNi, Ti oder Ta und schützen das Ag vor Oxidation beim reaktiven Aufbringen der Me2O-Schicht, indem der zunächst metallisch abgeschiedene Blocker aufoxidiert wird. Die MeO-Schichten entspiegeln das Schichtsystem und bestimmen die Reflexionsfarbe. Typisch sind Oxide der Metalle Sn, Zn, Bi, Ti oder deren Gemische. Die Me10- und die Me2O-Schichten können aus gleichen oder unterschiedlichen Materialien bestehen. Außerdem kann eine oder können beide dieser Me1O-Schichten auch aus mehreren übereinanderliegenden, unterschiedlichen MeO-Schichten aufgebaut sein (DE 39 41 026 A1; DE 39 41 027 A1).

Derartige Schichtsysteme haben den Nachteil, dass sie gegen äußere Einflüsse empfindlich sind, und die Haftfestigkeit des Schichtsystems unzureichend ist.

Es ist auch bekannt, Schichtsysteme mit noch höherer Selektivität herzustellen, deren Schichtsystem aus zwei Ag-Schichten mit der Schichtfolge Me1O - Ag - Blocker - Me2O - Ag - Blocker - Me3O bestehen (EP 0 632 849). Diese auf dem Flachglas aufgebrachten Schichtsysteme sind bis zum Herstellen des Scheibenverbundes relativ empfindlich gegen Schäden durch atmosphärische Einflüsse. Ein weiterer Nachteil ist es, dass sie nicht temperaturbelastbar sind.

Es ist weiterhin bekannt, temperaturbelastbare Schichtsysteme herzustellen, die ein Biegen und/oder Härten zulassen. Bei diesen Schichtsystemen ist jeweils eine Blockerschicht ober- und unterhalb der Ag-Schicht angeordnet, um diese gegen Oxidation und Diffusion bei der Wärmebehandlung zu schützen (EP 0 303 109). Auch diese Schichtsysteme haben den Nachteil, dass sie relativ empfindlich gegen Schäden durch atmosphärische Einflüsse sind.

Es sind Schichtsysteme bekannt, die auf der metallischen Reflexionsschicht eine Blockerschicht - auch als Sperrschicht bezeichnet - aufweisen, und das gesamte Schichtsystem mit einer Deckschicht abschließen (EP 0 035 906 A2; EP 0 304 234 A2; EP 0 275 474 A1; GB 2 186 001 A). Wenn auch die Selektivität derartiger Schichtsysteme relativ hoch ist, so haben diese den Nachteil der unzureichenden Haftfestigkeit, insbesondere bei der Weiterverarbeitung.

Um gleichzeitig einen guten Schutz gegen Schäden durch atmosphärische Einflüsse während der Lagerzeit bis zum Herstellen eines Scheibenverbundes zu erhalten, ist es bekannt, auf die Blockerschicht weitere Oxidschichten in der Reihenfolge von Oxiden eines Metalles 2 - eines Metalles 1 - eines Metalles 2 aufzubringen (DE 38 86 474 T2). Jedoch besteht der Nachteil, dass infolge der geringen Schichtdicke der Metall-1-Oxidschicht eine freie Einstellung der optischen Werte bei diesem Schichtsystem nicht möglich ist. Es sind nur geringe Variationen für die Einzelschichtdicken möglich, um die gewünschten Effekte zu erhalten.

Es ist auch ein Schichtsystem bekannt, welches ein hohes Reflexionsvermögen für Wärmestrahlung aufweist, welches derart aufgebaut ist, dass auf der Glasscheibe eine Oxidschicht, darauf von zwei Metallschichten als Blocker umgeben die Reflexionsschicht aus Ag aufgebracht ist, und das gesamte Schichtsystem mit zwei Oxidschichten abschließt (EP 0 308 578 A2). Die auf der obersten Metallschicht aufgebrachte Oxidschicht soll vorzugsweise eine Brechzahl von 2,3 aufweisen und kann bevorzugt aus TiO₂ bestehen.

Der Erfindung liegt die Aufgabe zugrunde, ein wärmedämmendes Schichtsystem für transparente Substrate, welches aus mindestens einer Reflexionsschicht, einer Blockerschicht aus Ti und einer auf dieser aufgebrachten Zwischenschicht und einer abschließenden Deckschicht besteht, zu schaffen, das eine möglichst hohe Selektivität besitzt. Gleichzeitig soll dieses Schichtsystem eine möglichst störungsfreie Weiterverarbeitung bis zum Scheibenverbund ermöglichen, das heißt, dass es eine hohe Beständigkeit gegen Schäden durch atmosphärische Einflüsse haben soll. Das Schichtsystem soll unempfindlich sein gegen Handhabungsfehler, wie z. B. Abrieb. Die optischen Werte sollen frei einstellbar sein. Weiterhin soll das Schichtsystem temperaturbelastbar und die Herstellung des Schichtsystems soll ökonomisch in bekannten Anlagen zur Vakuumbeschichtung - insbesondere durch Aufstäuben - möglich sein.

Erfindungsgemäß wird die Aufgabe nach den Merkmalen des Patentanspruches 1 gelöst. Weitere vorteilhafte Ausgestaltungen des Verfahrens sind in den Unteransprüche 2 bis 5 beschrieben.
Es wurde gefunden, dass bei gleicher Ag-Schichtdicke eine höhere IR-Reflexion erreicht wird, wenn auf die metallisch aufgestäubte Blockerschicht aus Ti unmittelbar anschließend eine Zwischenschicht aus TiO₂ mit einer Mindestdicke von 5 nm aufgebracht wird und darauf eine Deckschicht aus einem Oxid, Nitrid oder Oxinitrid eines anderen Metalles wie das der Blockerschicht gestäubt wird. Die Schichtdicken dieser beiden dielektrischen Schichten können frei so gewählt werden, dass sowohl die Selektivität hoch ist als auch die Reflexionsfarben in weiten Grenzen optimiert werden können. Die beiden unterschiedlichen dielektrischen Schichten können auch ein- oder mehrfach wiederholt aufgebracht werden. Durch die erfindungsgemäße Verwendung von Ti als Blockerschicht und TiO₂ als Zwischenschicht auf der Blockerschicht wird dieser Effekt besonders deutlich, denn überraschenderweise werden höhere Werte der Selektivität als allgemein üblich erreicht.
In diesem Zusammenhang wurde festgestellt, dass dabei gleichzeitig die Festigkeit des gesamten Schichtsystems gegenüber den bekannten Schichtsystemen um etwa den Faktor 2 verbessert und der Schutz gegen Schäden durch atmosphärische Einflüsse noch weiter erhöht wird.

Das Erfindungswesentliche gegenüber anderen bekannten Schichtsystemen- ist das auf der Reflexionsschicht aufgebrachte Teilschichtsystem aus der Blockerschicht aus Ti, der dielektrischen Zwischenschicht aus TiO₂ und der dielektrischen Deckschicht, die aus einem anderen Metall als das der Zwischenschicht ist.

Vorteilhaft ist es, wenn bei der Herstellung der dielektrischen Zwischenschicht der Arbeitspunkt der reaktiven Zerstäubung derart eingestellt wird, dass leicht überstöchiometrische Schichten abgeschieden werden. Um eine gezielte Stöchiometrie einstellen zu können, kann die Regelung des Reaktivgaseinlasses auf eine konstante Plasmaemission oder auf eine konstante Brennspannung erfolgen. Weiterhin ist es vorteilhaft, wenn die Zwischen- und/oder Deckschicht mit Hilfe des reaktiven Mittelfrequenzsputterns hergestellt wird.
Bei Anordnung von Blockerschichten beiderseits der Ag-Schicht lassen sich derartig beschichtete Scheiben auch biegen oder härten.

An zwei Ausführungsbeispielen wird die Erfindung näher beschrieben.

Es ist ein erfindungsgemäßes Schichtsystem auf eine Flachglasscheibe von 4 mm Dicke mit folgendem Schichtaufbau aufgebracht:

| Glassubstrat | | |
|---|---|---|
| ZnO | (35 nm) | oxidische Grundschicht |
| Ag | (15 nm) | Reflexionsschicht |
| Ti | ( 3 nm) | Blockerschicht |
| TiO₂ | (21 nm) | Zwischenschicht |
| ZnO₂ | (26 nm) | oxidische Deckschicht |

Die optische Ausmessung dieses Schichtsystems zeigte, dass gegenüber einem optisch optimierten Schichtsystem nach dem Stand der Technik, d. h. ohne die erfindungsgemäße TiO₂-Zwischenschicht, die Reflexion im Infrarotbereich bei gleicher Schichtdicke der Reflexionsschicht aus Ag wesentlich höher ist. Die Andruckkraft der Prüfspitze im Abrasionstest bis zur ersten Beschädigung lag um den Faktor 2 höher.

Eine weitere Ausführungsform des Schichtsystems besteht darin, dass sich das Teilschichtsystem - wie im ersten Beispiel gezeigt - aus TiO₂-Zwischen- und dielektrischer Deckschicht auf der Blockerschicht noch einmal wiederholt. Das Schichtsystem ist dabei wie folgt aufgebaut:

| Glassubstrat | | |
|---|---|---|
| ZnO | (35 nm) | oxidische Grundschicht |
| Ti | ( 4 nm) | Blocker |
| Ag | (15 nm) | Reflexionsschicht |
| Ti | ( 5 nm) | Blockerschicht |
| TiO₂ | (12 nm) | Zwischenschicht |
| SnO₂ | (10 nm) | oxidische Deckschicht |
| TiO₂ | ( 8 nm) | Zwischenschicht |
| SnO₂ | (10 nm) | oxidische Deckschicht |

Nach der Beschichtung, wie im ersten Beispiel beschrieben, wurde das Glassubstrat mit dem darauf befindlichen Schichtsystem beim Erweichungspunkt des Glases gebogen und durch Anblasen mit kalter Luft gehärtet. Die optische Ausmessung zeigte, dass gegenüber einem optisch optimierten Schichtsystem nach dem Stand der Technik, d. h. ohne die erfindungsgemäße TiO₂-Zwischenschicht, die Reflexion im Infrarotbereich bei gleicher Schichtdicke der Reflexionsschicht aus Ag wesentlich höher ist. Die Andruckkraft der Prüfspitze im Abrasionstest bis zur ersten Beschädigung lag um den Faktor 3 höher. Schäden durch atmosphärische Einflüsse während einer sechswöchigen freien Lagerung an Luft waren nicht zu erkennen. Demgegenüber zeigen die bekannten Schichtsysteme bereits nach vierwöchiger Lagerzeit erste Schäden.

## Patentansprüche

1. Wärmedämmendes Schichtsystem für transparente Substrate, bestehend aus einer oder mehreren metallischen Reflexionsschichten, die auf einer auf dem Substrat aufgebrachten dielektrischen Grundschicht aufgebracht sind, einer ersten auf der Reflexionsschicht oder auch zusätzlich einer zweiten unter aufgebrachten Blockerschicht aus Ti und einer Zwischenschicht aus einem Oxid, die auf der ersten Blockerschicht aufgebracht ist, die auf der Reflexionsschicht aufgebracht ist, **dadurch gekennzeichnet, dass** die Zwischenschicht, die auf der ersten Blockerschicht aufgebracht ist, die auf der Reflexionsschicht aufgebracht ist aus TiO₂ und mindestens 5 nm dick ist, dass auf der Zwischenschicht eine Deckschicht eines Oxids, Nitrids oder Oxinitrids eines anderen Metalls als das der Blockerschicht aufgebracht ist, und dass der Schichtverbund aus Zwischenschicht und Deckschicht mindestens einmal auf der Blockerschicht aufgebracht ist.

2. Wärmedämmendes Schichtsystem nach Anspruch 1, **dadurch gekennzeichnet, dass** das Metall für die Deckschicht Bi, Sn, Zn oder ein Gemisch aus diesen Metallen ist.

3. Wärmedämmendes Schichtsystem nach Anspruch 1 und 2, **dadurch gekennzeichnet, dass** die Zwischenschicht 5 bis 25 nm dick ist.

4. Wärmedämmendes Schichtsystem nach Anspruch 1 bis 3, **dadurch gekennzeichnet, dass** die Deckschicht 5 bis 60 nm dick ist.

5. Wärmedämmendes Schichtsystem nach Anspruch 1 bis 4, **dadurch gekennzeichnet, dass** die Zwischenschicht durch Regelung des Reaktivgases als eine leicht überstöchiometrische Schicht abgeschieden ist.

## Claims

1. Thermally insulating coating system for transparent substrates, comprising one or more metallic reflection layers, which are applied to a dielectric base layer which has been applied to the substrate, a first blocker layer, which is applied to the reflection layer or, in addition, a second blocker layer applied beneath, comprising Ti, and an intermediate layer which comprises an oxide and is applied to the first blocker layer, which has been applied to the reflection layer, **characterized in that** the intermediate layer, which has been applied to the first blocker layer which has been applied to the reflection layer, comprises TiO₂ and is at least 5 nm thick, **in that** a covering layer of an oxide, nitride or oxynitride of a different metal from that of the blocker layer is applied to the intermediate layer, and **in that** the layer system comprising intermediate layer and covering layer is applied at least once to the blocker layer.

2. Thermally insulating coating system according to Claim 1, **characterized in that** the metal for the covering layer is Bi, Sn, Zn or a mixture of these metals.

3. Thermally insulating coating system according to Claims 1 and 2, **characterized in that** the intermediate layer is 5 to 25 nm thick.

4. Thermally insulating coating system according to Claims 1 to 3, **characterized in that** the covering layer is 5 to 60 nm thick.

5. Thermally insulating coating system according to Claims 1 to 4, **characterized in that**, by regulating the reactive gas, the intermediate layer is deposited as a slightly superstoichiometric layer.

## Revendications

1. Revêtement multicouche thermiquement isolant pour un substrat transparent, composé d'une ou de plusieurs couches de réflexion métalliques qui sont appliquées sur une couche de base diélectrique appliquée sur le substrat, d'une première couche d'arrêt en Ti appliquée sur la couche de réflexion ou également d'une deuxième couche de blocage en Ti appliqués sous celle-ci et d'une couche intermédiaire dans un oxyde, laquelle est appliquée sur la première couche de blocage qui est appliquée sur la couche de réflexion, **caractérisé en ce que** la couche intermédiaire qui est appliquée sur la première couche de blocage, laquelle est appliquée sur la couche de réflexion, est en TiO₂ et a une épaisseur minimale de 5 nm, qu'une couche de recouvrement d'un oxyde, d'un nitrure ou d'un nitrure d'oxyde d'un autre métal que celui de la couche d'arrêt est appliquée et que l'ensemble de couches composé de la couche intermédiaire et de la couche de recouvrement est appliqué au moins une fois sur la couche d'arrêt.

2. Revêtement multicouche thermiquement isolant selon la revendication 1, **caractérisé en ce que** le métal de la couche de recouvrement est du Bi, Sn ,Zn ou un mélange de ces métaux.

3. Revêtement multicouche thermiquement isolant selon la revendication 1 et 2, **caractérisé en ce que** la couche intermédiaire a une épaisseur comprise entre 5 et 25 nm.

4. Revêtement multicouche thermiquement isolant selon les revendications 1 à 3, **caractérisé en ce que** la couche de recouvrement a une épaisseur comprise entre 5 et 60 nm.

5. Revêtement multicouche thermiquement isolant selon les revendications 1 à 4, **caractérisé en ce que** la couche intermédiaire est déposée sous la forme d'une couche légèrement sur-stoechiométrique en régulant le gaz réactif.
